# EUROPEAN PATENT APPLICATION

(11) **EP 4 501 588 A1**
(43) Date of publication of application: **05.02.2025**
(21) Application number: 23189121.9
(22) Date of filing: 02.08.2023
(51) Int. Cl.: B29C 53/08, B29L 23/00, B31F 1/00, B31D 5/00

(54) **METHOD AND APPARATUS FOR BENDING STRAWS**

(71) Applicant: International Tobacco Machinery Poland Sp. z o.o., 26-600 Radom (PL)
(72) Inventor: SMAGOWSKI, Slawomir, 26-600 Radom (PL)
(74) Representative: Markieta, Jaroslaw Franciszek

(57) **Abstract**

An apparatus (1), for bending straws (2) having a first end, a second end and a bending section (20, 22, 21 respectively in fig.3), comprises: a conveyor (5) for conveying the straws (2) provided with a plurality of slots (10) arranged side by side on the working surface (30) of the conveyor (5), a bending unit (6) provided with a bending element (12) adapted to bend the straws (2) around a thrust element (11).

The distance (d1 in fig.3) between the slots (10) is smaller than the distance (d2 in fig.3) between the second end (22) of the straw (2) and the bending section (21).

During bending, the straw (2) moves along a path (or plane) at an angle (α) to the working surface (30) of the conveyor (5), such that the second end (22) of the straw (2) passes over the straw (2) in the adjacent slot (10).

## Description

The object of the invention is a method and apparatus for bending straws. The invention finds application in the food industry, in particular in the production of drinking straws.

An apparatus for creasing straws on a drum conveyor is known from the document WO2021/250711A1. The document discloses an apparatus for bending straws wherein each straw is provided with a flexible part configured to allow the straw to be bent. The straws are arranged, at least temporarily, on positioning elements, while each bending element allows the corresponding straw to be bent in its flexible part. It is characteristic for the solution from the prior art that the bending elements of the straws are attached on the circumferential surface of the drum conveyor, on the same surface on which the straw positioning elements are attached. Any change in the specification of the straw, e.g. its length, requires conveyor retooling, involving a replacement of at least some of its components or parts, in order to obtain a dimensionally adapted set of bending and positioning elements.

A problem occurring in the prior art is the limitation of the possibility of retooling the straw manufacturing equipment when the product specification changes, i.e. the impossibility of manufacturing bendable drinking straws with a significant length of the bendable part of the straw. Another problem is a low efficiency of the straw bending apparatuses due to the impossibility of reducing the pitch determining the position of the adjacent slots holding the drinking straws on the circumference of a conveyor, in particular a drum conveyor. This limitation results from the need to maintain a distance between slots that allows the straw to be bent without colliding with adjacent slots.

The object of the invention is an apparatus for bending straws comprising a first end and a second end connected by an area adapted for bending, the apparatus comprising: a conveyor for conveying the straws provided with a plurality of slots adapted to hold the first ends of the straws, the slots being arranged side by side on a working surface of the conveyor at a first distance, a bending unit provided with a thrust element fixed relative to the conveyor, the thrust element determining the axis of bending of the straw, and the bending element adapted to bend the straws around the thrust element. The apparatus according to the invention is characterised in that the first distance between the slots is smaller than the second distance between the second end of the straw and the axis of bending of the straw around the thrust element, and the bending unit is adapted to bend the straw around the thrust element so that the second end of the straw moves along a path running at an angle to the working surface of the conveyor, the angle being selected so that the second end of the straw passes over the straw situated in the adjacent slot.

Preferably, the apparatus according to the invention is characterised in that the conveyor for conveying the straws is a drum conveyor.

Preferably, the apparatus according to the invention is characterised in that the conveyor for conveying the straws is a linear conveyor.

The apparatus according to the invention is characterised in that the bending element is arranged on the working surface of the conveyor.

The apparatus according to the invention is characterised in that the bending element is arranged on the front surface of the conveyor, perpendicular to the working surface of the conveyor.

The apparatus according to the invention is characterised in that the slots of the conveyor are adapted to hold the first end of the straw parallel to the working surface of the conveyor.

Preferably, the apparatus according to the invention is characterised in that the angle of inclination is selected so that the other end of the straw passes over the elements of the adjacent slot.

Preferably, the apparatus according to the invention is characterised in that the angle of inclination is selected so that the other end of the straw passes over the adjacent bending element of the adjacent bending unit.

The apparatus according to the invention is characterised in that the thrust element is positioned perpendicular to the plane of the path along which the other end of the straw moves during bending.

The apparatus according to the invention is characterised in that the angle of inclination of the path relative to the working surface of the conveyor is in the range of 5-90°.

Preferably, the apparatus is characterised in that the angle of inclination of the path relative to the working surface of the conveyor is in the range of 5-45°.

The apparatus according to the invention is characterised in that the angle of inclination of the path relative to the working surface of the conveyor is variable and is in the range of 5-90°.

The object of the invention is also a method of bending straws comprising a first end and a second end, connected by an area adapted for bending, comprising steps wherein: the straws are conveyed on the conveyor in the slots adapted to hold the first ends of the straws, the slots are placed side by side on the working surface of the conveyor at a first distance, the conveyor working with a bending unit provided with the thrust element fixed relative to the conveyor, the thrust element determining the axis of bending of the straw, and the bending element adapted to bend the straws around the thrust element. The method according to the invention is characterised in that the straws are bent in the bending unit around the thrust element so that the other end of the straw moves along a path running at an angle to the working surface of the conveyor. The first distance between the slots is smaller than the second distance between the tip of the second end of the straw and the axis of bending of the straw around the thrust element, and the angle is selected so that the second end of the straw passes over the straw situated in the adjacent slot.

The invention has the advantage of increasing the efficiency of the apparatus by reducing the distance between the slots in which the straws are secured, in particular when the length of the bent part of the straw is much greater than the distance between the slots holding the straws on the conveyor.

The object of the invention is shown in more detail in a preferred embodiment in a drawing in which:
- Fig. 1: diagrammatically shows a straw placed in a slot of a bending unit;
- Fig. 2a: diagrammatically shows a sequence of a straw bending movement in a state-of-the-art apparatus;
- Fig. 2b: diagrammatically shows a sequence of the straw bending movement in the apparatus according to the invention;
- Fig. 3: diagrammatically shows, in a top view, the sequence of the straw bending movement in the apparatus according to the invention;
- Fig. 4: shows a section of the apparatus according to the invention in an embodiment using a drum conveyor;
- Fig. 5: shows a preferred embodiment of the apparatus in the embodiment using a drum conveyor;

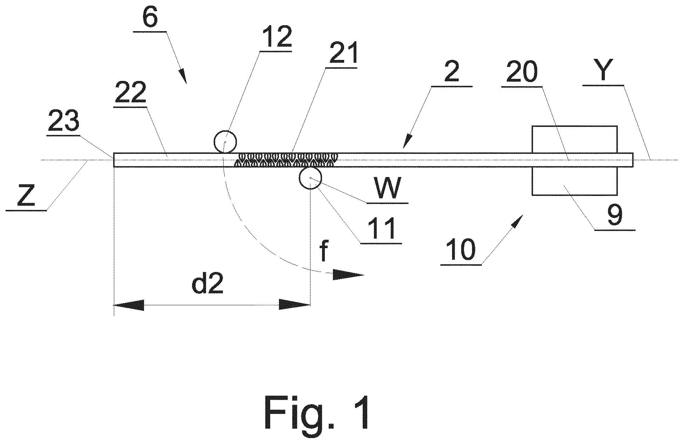

Fig. 1 diagrammatically shows a straw **2** adapted for bending by creating a bendable area **21** in the straw, for example by making in advance a series of creases to increase the bendability of the oval straw. Straws of this type are used, for example, in the food industry where they are attached to beverage cartons, particularly for children.

The straw **2** has a first end **20,** a bendable area **21** and a second end **22,** whereas it is also possible to distinguish the tip of the second end **22** of the straw **2** marked in **Fig. 1** with the number **23.** The straw **2** is placed with the first end **20** in the slot **10** of the apparatus according to invention **1.** In **Fig. 1****,** there are visible holders **9** of the slots **10** holding the straw **2** on the conveyor by which the straw **2** is conveyed during the bending process. For the sake of simplicity, the conveyor itself is not shown in **Fig. 1****.** The straw **2** is supported on one side by a thrust element **11** which determines the axis **X** of bending and/or the axis **W** of rotation around which the straw **2** is bent. The thrust element **11** remains stationary with respect to the conveyor and the slot **10** in which the first end of the straw **20** is held. On the other side, a bending element **12** of the bending unit **6** of the apparatus **1** pushes against the straw **2.** The bending element **12** is adapted to move along a path which, in the top view in **Fig. 1****,** is marked with an arrow **f.** In **Fig. 1****,** there is also marked a second distance **d2** between the axis **W** of the thrust element **11** and the tip **23** of the second end **22** of the straw **2.**

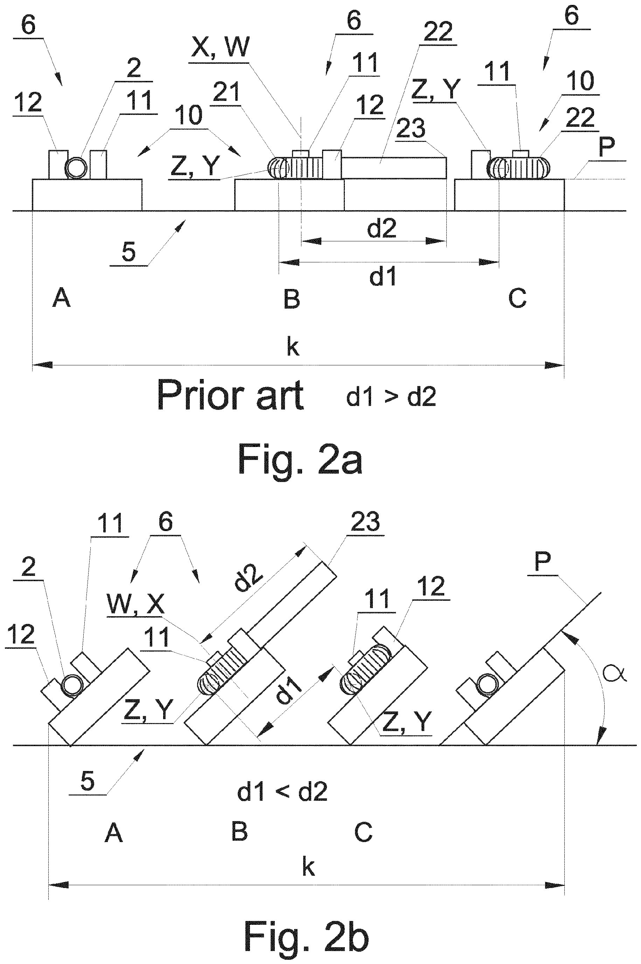

**Figs. 2a** and **2b** show sequences of movements **A, B, C** made by an apparatus known from the prior art **(****Fig. 2a****)** and the apparatus according to the invention **(****Fig. 2b****),** in both cases bending the straw **2.** The apparatus shown in **Fig. 2a** is characterised by a large distance between adjacent slots **10,** which adversely affects the efficiency of the apparatus. In the diagrammatically shown section **k** of the conveyor **5,** it is possible to place three slots **10** arranged at a first distance **d1** from one another. The first distance **d1** between the slots **10** arranged side by side means a distance corresponding to the distance between the longitudinal axes **Z** of the straws **2** held in the slots **10,** with the longitudinal axes **Z** of the straws **2** coinciding with the longitudinal axes **Y** of the slots **10.** Also possible are embodiments wherein the longitudinal axis **Z** of the straws **2** will not coincide with the longitudinal axis **Y** of the slots **10.** In that case, the first distance **d1** should be measured from the longitudinal axis **Z** of the straw **2** to the longitudinal axis **Z** of the next adjacent straw **2.** In solutions known from the prior art, the first distance **d1** must be greater than the second distance **d2** which is measured from the axis of bending **X** which in this embodiment is the same as the axis **W** of the thrust element **11** to the tip **23** of the straw **2.** If the first distance **d1** is equal to or less than the second distance **d2,** a collision with the adjacent bending unit **6** will occur. In the first stage **A,** the straw **2** is conveyed in the slot **10** and is positioned between the thrust element **11** and the bending element **12.** In the second stage **B,** the bending element **12** makes a rotational movement around the axis of rotation **X,** which in this embodiment coincides with the axis **W** of the thrust element **11,** and pushing against the other end **22** of the straw **2** causes it to bend in the bendable area **21** and to wind around the thrust element **11,** as shown in the next stage **C.** Since the slots **10** and the bending units **6** are situated in a substantially horizontal plane, during the bending of the straw **2** its second end **22** moves along a path **P,** also substantially horizontal. As horizontal should be assumed a plane parallel to the working surface of a linear (chain, belt) conveyor or tangential to the working surface in the case of a drum conveyor. In this embodiment, the bending element **12** moves along a path which substantially coincides with the path **P** along which the other end **22** of the straw **2** moves during bending. Once the straw **2** has been bent around the thrust element **11,** the bending element **12** returns to its initial position while the other end **22** is held in such position by a holding element (not shown in this figure) or is placed in a groove of the conveyor where it maintains such position until it is transferred to the next stage of the process which may be, for example, packaging. The axis **W** of the thrust element **11** in this embodiment is positioned perpendicular to the plane of the path **P.** However, also possible are embodiments wherein the axis **W** of the thrust element **11** will be positioned at an angle other than 90° to the plane of the path **P** along which the other end **22** of the straw **2** moves.

Fig. 2b shows the same sequence **A, B, C** of bending of the straw **2** in the apparatus according to the invention wherein an inclination of the path **P** along which the second end **22** of the straw **2** moves by an angle **α** is used, which makes it possible to place more slots **10,** for example four slots **10,** on the same section **k** of the conveyor **5.** The angle **α** is selected when designing the apparatus according to the invention depending on the distance between the successive straws **2,** i.e. the first distance **d1** and the second distance **d2** between the axis **W** of the thrust element **11** and the tip **23** of the second end **22** of the straw **2,** the angle **α** must be sufficiently large so that the path **P** along which the second end **22** of the straw **2** moves passes over the straw **2** in an adjacent slot **10,** whereas by the adjacent slot **10** is meant the slot situated on the side into which the straw **2** is bent. Preferably, the angle **α** is selected such that the second end **22** of the straw **2** moves along a path **P** passing over any element of the adjacent slot **10.** In a particularly preferred embodiment, the angle **α** is selected such that the path **P** along which the second end **22** of the straw **2** moves during bending also passes over the thrust element **11** of the adjacent slot **10** and the bending element **12** of the adjacent bending unit **6.**

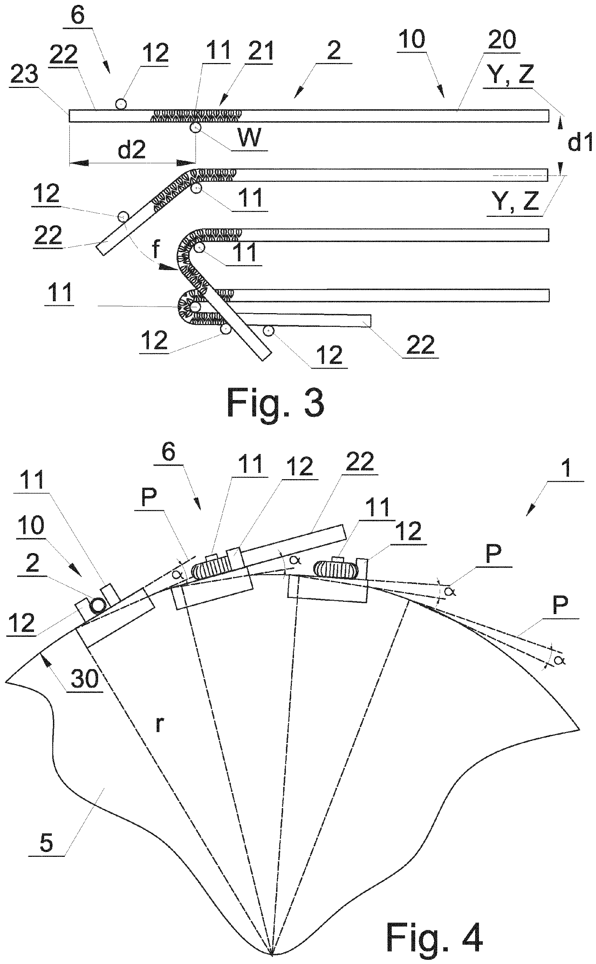

The angle **α** is determined relative to the surface tangent to the surface of the conveyor on which the slots **10** are arranged. In the case of a linear conveyor, e.g. using a chain or a belt, this surface is the same as the surface of the conveyor, whereas in the case of a drum conveyor, the angle **α** is determined relative to the tangent to the working surface of the conveyor at the point of attachment of the slot **10.** Details of the determination of the angle **α** for the case of a drum conveyor are shown and discussed with reference to **Fig. 4****.**

The invention is applicable wherever the first distance **d1** is smaller than the second distance **d2.**

**Fig. 3** diagrammatically shows in more detail the sequence of bending of successive straws **2** in adjacent slots **10** on the conveyor in a top view. It can be seen in successive positions how the bending element **12** pushes against the second end **22** of the straw **2** and bends the straw **2** in the direction **f** around the thrust element **11.** This figure shows four straws **2** in different phases of the bending process in the apparatus according to the invention. For the sake of simplicity, the jaws **9** holding stationary the first end **20** of the straw **2** in the slot **10** of the conveyor are omitted.

The first straw **2** shown at the top of **Fig. 3** is waiting in the initial position for the bending process. The first straw **2** is in the position shown and described in detail with reference to **Fig. 1****.** The second straw **2** below is in the first bending phase, the bending element **12** having moved the second end of the straw **22** by an angle of 45° relative to the initial position. By using the straws **2** adapted for bending, i.e. having an area **21** adapted for bending, the bending process does not cause uncontrolled bending of the straw and damage to the straw and is reproducible, thus ensuring that the quality of production is maintained. The straw **2** in the third position is already bent to an angle of about 120° relative to the initial position and passes over the fourth straw **2** situated in the final phase of bending when the bending element has bent the straw **2** by about 180° relative to the initial position. The passage of the straw **2** over a straw in the adjacent slot is only possible by routing the straw **2** along a path inclined at an angle **α** as shown in Fig. 4. It can be seen that the third straw **2** moves along a path that passes over the elements of the adjacent slot, in particular over the thrust element **11** of the adjacent slot. In the event that the second end **22** of the straw **2** would have a much greater length than that shown in **Fig. 3****,** the angle **α** should ensure that the second end **22** of the straw **2** also passes over the bending element **12** of the adjacent bending unit **6** operating on the adjacent straw **2.**

The solution according to the invention not only provides an increase in production efficiency by reducing the pitch with which adjacent slots **10** holding the straws **2** can be spaced, but also eliminates the need to retool the machine in the event of a change in the specification of the straw to be produced, making it practically possible to bend straws having the ends **2** of any length.

**Fig. 4** shows, in a side view, a section of the apparatus **1** according to a preferred embodiment wherein the conveyor **5** conveying the straws **2** to be bent is a drum conveyor. **Fig. 4** shows an inclination of the path **P** along which the other end **22** of the straw **2** moves by an angle **α**. The angle **α** is measured relative to the working surface **30** of the conveyor **5,** in this case the surface tangent to the surface of the drum conveyor or to its envelope, in cases where the drum conveyor is in the form of a prism. In **Fig 4****,** the working surface **30** of the drum conveyor **5,** relative to which the angle **α** is determined, is perpendicular to the radius **r** of the drum conveyor **5.**

In the embodiment shown in Fig. 4, the angle **α** results from the inclination of the entire slot **10,** however, the inclination of the path **P** along which the second end **22** of the straw **2** moves can also be obtained according to the invention in another way, for example by forcing the movement of the bending element **12** along an ascending track so that the path **P** forms a sector of a spiral or another curve running in three-dimensional space. In this case, the bending element **12** will push against the other end **22** of the straw **2** also from below. In other embodiments of the invention, the angle **α** varies along the path P along which the second end **22** of the straw **2** moves so that the second end **22** of the straw **2** traverses portions of the path **P** at different instantaneous angles.

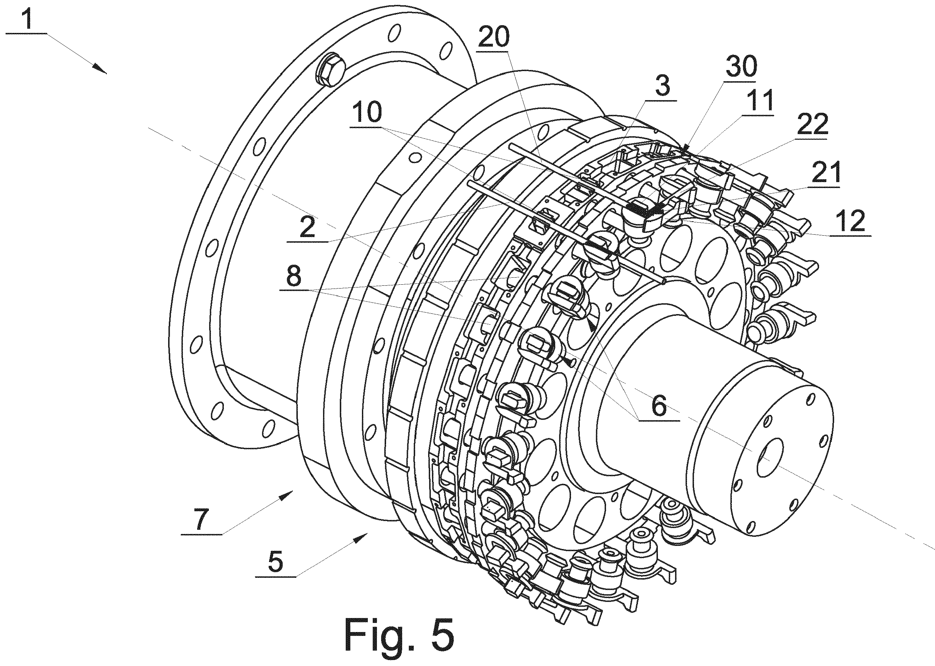

**Fig. 5** shows the apparatus **1** for bending the straws **2** according to a preferred embodiment of the invention. In this embodiment, a number of slots **10** adapted to hold the first end **20** of the straws **2** in a position parallel to the working surface **30** of the conveyor are mounted on the drum conveyor **5,** the parallelism of the first end **20** of the straw **2** to the working surface **30** of the conveyor being a technological condition advantageously influencing the process of conveying the straws, in particular in the case of drum conveyors.

In the preferred embodiment of **Fig. 5****,** the bending unit **6** is fixed by means of a support **8** on the front surface **3** of the conveyor **5** which is preferably perpendicular to the working surface **30** of the conveyor. The bending unit **6** comprises two main functional units, the first comprising the thrust element **11** which remains stationary relative to the working surface **30** of the conveyor, and a bending element **12** which moves along a path running substantially around the thrust element **11,** the bending element **12** being adapted to bend the second end **22** of the straw **2** around the thrust element **11.**

During the bending of the second end **22** of the straw **2,** the bending mechanism **12,** by making a rotational movement, pushes against the second end **22** of the straw, causing the straw **2** to bend around the thrust element **11,** and the movement of the bent second end **22** of the straw 2 along the path **P** over the adjacent bending unit **6** and the straw **2** placed in it.

In **Fig. 5****,** for the sake of clarity of the drawing, the drive system actuating the bending element **12** is not shown, typically it is a mechanical system controlled and driven by a cam in combination with a gear system of an arrangement typical of power transmission in conveyors. Such an arrangement may consist of a cam, a gear race, and a gear wheel.

In the event of a change in the specification, in particular a change of the length of the straw **2,** it is possible to quickly adapt the apparatus **1** to a new size of the straws. By means of an adjusting unit **7,** which in this embodiment is situated inside the conveyor **5,** the bending units **6** placed on the supports **8** are moved away from or pushed close to the front surface **3** of the conveyor **5.** Alternatively, a solution is also possible wherein the adaptation of the apparatus **1** to the new size of the straws is carried out manually by moving away or pushing close, from or to the front surface **3** of the conveyor **5,** the bending units **6** placed on the supports **8** which are, for example, additionally connected by a common retaining ring.

In all embodiments, the apparatus according to the invention is characterised by being adapted to bend straws comprising a first end and a second end, connected by an area adapted for bending. The apparatus comprises the conveyor for conveying the straws provided with a plurality of slots adapted to hold the first ends of the straws, the slots being arranged side by side on the working surface of the conveyor at a first distance, a bending unit provided with the thrust element fixed relative to the conveyor, the thrust element determining the axis of bending of the straw, and the bending element adapted to bend the straws around the thrust element. In a preferred embodiment, the first distance between the slots is smaller than the second distance between the second end of the straw and the axis of bending of the straw around the thrust element, and the bending unit is adapted to bend the straw around the thrust element so that the second end of the straw moves along a path running at an angle **α** relative to the working surface of the conveyor. The angle **α** is selected so that the second end of the straw passes over the straw situated in the adjacent slot.

In a preferred embodiment, the straw conveyor is a drum conveyor.

In another equally preferred embodiment, the straw conveyor is a linear conveyor.

In all embodiments, the bending element is arranged on the working surface of the conveyor.

Similarly, in all embodiments, the apparatus according to the invention is characterised in that the bending element is arranged on the front surface of the conveyor, perpendicular to the working surface of the conveyor.

In all embodiments, the apparatus according to the invention is characterised in that the slots of the conveyor are adapted to hold the first end of the straw parallel to the working surface of the conveyor.

In another preferred embodiment, the angle **α** is selected such that the other end of the straw passes over the elements of the adjacent slot.

In a preferred embodiment, the apparatus according to the invention is characterised in that the angle **α** is selected such that the other end of the straw passes over the adjacent bending element of the adjacent bending unit.

In a preferred embodiment, the method of bending straws **2** comprising a first end **20** and a second end **22** connected by an area **21** adapted for bending comprises steps wherein the straws **2** are conveyed and the straws **2** are bent along a specific path determined according to the invention. On the conveyor **5,** the straws **2** are conveyed in slots **10** adapted to hold the first ends of the straws **20,** the slots **10** being placed side by side on the working surface **30** of the conveyor **5** at a first distance **d1.** The conveyor works with a bending unit **6** provided with a thrust element **11** fixed relative to the conveyor **5,** the thrust element **11** determining the **X** axis of bending of the straw **2,** and a bending element **12** adapted to bend the straws **2** around the thrust element **11.** In the bending unit **6,** the straws **2** are bent around the thrust element **11** so that the second end **22** of the straw **2** moves along a path **P** running at an angle **α** relative to the working surface **30** of the conveyor, the first distance **d1** between the slots **10** being smaller than the second distance **d2** between the tip **23** of the second end **22** of the straw **2** and the axis **X** of bending of the straw **2** around the thrust element **11,** and the angle **α** being selected such that the second end **22** of the straw **2** passes over the straw **2** situated in the adjacent slot **10.**

## Claims

1. An apparatus (**1**) for bending straws (**2**) comprising a first end (**20**) and a second end (**22**), connected by an area (**21**) adapted for bending, the apparatus comprising:
a conveyor (**5**) for conveying straws (**2**) provided with a plurality of slots (**10**) adapted to hold the first ends of the straws (**20**), the slots (**10**) being arranged side by side on a working surface (**30**) of the conveyor (**5**) at a first distance (**d1**),
a bending unit (**6**) provided with
a thrust element (**11**) fixed relative to the conveyor (**5**), the thrust element (**11**) determining the axis (**X**) of bending of the straw (**2**), and
a bending element (**12**) adapted to bend the straws (**2**) around the thrust element (**11**),
**characterised in that**
the first distance (**d1**) between the slots (**10**) is smaller than the second distance (**d2**) between the tip (**23**) of the second end (**22)** of the straw (**2**) and the axis (**X**) of bending of the straw (**2**) around the thrust element (**11**), and
the bending unit (**6**) is adapted to bend the straw (**2**) around the thrust element (**11**) so that the other end (**22**) of the straw (**2**) moves along a path (**P**) running at an angle (**α**) to the working surface (**30**) of the conveyor,
the angle (**α**) being selected so that the other end (**22**) of the straw (**2**) passes over the straw (**2**) situated in the adjacent slot (**10**).

2. The apparatus as in claim 1, **characterised in that** the conveyor (**5**) for conveying the straws is a drum conveyor.

3. The apparatus as in claim 1, **characterised in that** the conveyor (**5**) for conveying the straws is a linear conveyor.

4. The apparatus as in any of the claims 1 to 3, **characterised in that** the bending element (**12**) is arranged on the working surface (**30**) of the conveyor (**5**).

5. The apparatus as in any of the claims 1 to 3, **characterised in that** the bending element (**12**) is arranged on the front surface (**3**) of the conveyor (**5**), perpendicular to the working surface (**30**) of the conveyor (**5**).

6. The apparatus as in any of the claims 1 to 5, **characterised in that** the slots (**10**) of the conveyor (**5**) are adapted to hold the first end of the straw (**20**) parallel to the working surface (**30**) of the conveyor (**5**).

7. The apparatus as in any of the claims 1 to 6, **characterised in that** the angle (**α**) is selected so that the other end (**22**) of the straw (**2**) passes over the bending unit (**6**) of the adjacent slot (**10**).

8. The apparatus as in any of the claims 1 to 7, **characterised in that** the angle (**α**) is selected so that the second end (**22**) of the straw (**2**) passes over the adjacent bending element (**12)** of the adjacent bending unit (**6**).

9. The apparatus as in any of the claims 1 to 8, **characterised in that** the thrust element (**11**) is positioned perpendicular to the plane of the path (**P**).

10. The apparatus as in any of the claims 1 to 9, **characterised in that** the angle (**α**) of inclination of the path (**P**) relative to the working surface (**30**) of the conveyor (**5)** is in the range of 5-90°.

11. The apparatus as in claim 10, **characterised in that** the angle (**α**) of inclination of the path (**P**) relative to the working surface (**30**) of the conveyor (**5)** is preferably in the range of 5-45°.

12. The apparatus as in any of the claims 1 to 10, **characterised in that** the angle (**α**) of inclination of the path (**P**) relative to the working surface (**30**) of the conveyor (**5)** is variable and is in the range of 5-90°.

13. A method of bending straws (**2**) comprising a first end (**20**) and a second end (**22**), connected by an area (**21**) adapted for bending, comprising steps wherein:
the straws (**2)** are conveyed on the conveyor (**5**) in the slots (**10**) adapted to hold the first ends of the straws (**20**), the slots (**10**) being arranged side by side on the working surface (**30**) of the conveyor (**5**) at the first distance (**d1**), the conveyor working with the bending unit (**6**) provided with the thrust element (**11**) fixed relative to the conveyor (**5)**, the thrust element (**11**) determining the axis (**X**) of bending of the straw (**2**), and the bending element (**12**) adapted to bend the straws (**2**) around the thrust element (**11**),
**characterised in that**
the straws (**2**) are bent in the bending unit (**6**) around the thrust element (**11**) so that the second end (**22**) of the straw (**2**) moves along a path (**P**) running at an angle (**α**) relative to the working surface (**30**) of the conveyor, the first distance (**d1**) between the slots (**10**) being smaller than the second distance (**d2**) between the tip (**23)** of the second end (**22**) of the straw (**2**) and the axis (**X**) of bending of the straw (**2)** around the thrust element (**11**), and the angle (**α**) is selected so that the second end (**22**) of the straw (**2**) passes over the straw (**2**) situated in the adjacent slot (**10**).
